# EUROPEAN PATENT SPECIFICATION

(11) **EP 2 908 420 B1**
(45) Date of publication and mention of the grant of the patent: **24.06.2020**
(21) Application number: 14425013.1
(22) Date of filing: 13.02.2014
(51) Int. Cl.: H02J 7/02, H02J 7/34, H02M 7/797, B60L 15/00, B60L 50/61

(54) **Device for managing a battery**
Vorrichtung zur Verwaltung einer Batterie
Dispositif de gestion d'une batterie

(43) Date of publication of application: 19.08.2015
(73) Proprietor: R.G.M. S.p.A., 16153 Genova (IT)
(72) Inventor: Lotti, Fabio, 16149 Genova (IT); Pallottini, Alberto, 16157 Genova (IT)
(74) Representative: Forattini, Amelia

(56) References cited:
- WO-A1-97/08009
- DE-A1- 4 107 391
- JP-A- H 099 417
- US-A1- 2009 034 300

## Description

The present invention relates to a device for managing a battery.

The conventional power grid battery chargers currently known are generally electrically insulated and are often constituted by external apparatuses with their own power circuit, with their own control unit, with their own electric filters, and with their own physical structure, which includes for example a casing element and adapted heat sinks.

Electronic devices, known as inverters, are currently also known which are used to convert an input direct current, or an alternating current having a given voltage and frequency, into an output alternating current with a different and desired voltage and frequency; those inverters also require their own logic system, their own magnetic parts, their own driving systems, dedicated semiconductor components and also cooling systems.

Currently, it is generally necessary, in use, to couple battery chargers and inverters. Such need to couple battery chargers and inverters entails the provision of redundant electric circuits, which are generally difficult to physically integrate together and are therefore bulky, scarcely flexible and also expensive.

US2009/034300 discloses a bidirectional DC-AC inverter having a capacitor and two coils connected to the capacitor and wherein a control section controls first switching elements in such a manner that the two coils function as booster coils when an alternating voltage input from a system power supply is converted to a direct current voltage.

WO97108009 discloses a mixed electric power supply system comprising an inverter and an alternating-direct converter. The inverter has switching means that form an alternating/direct converter receiving at the input a monophase alternating current voltage and delivering a direct current voltage for charging a battery.

The aim of the present invention is to provide a device for managing a battery that solves the technical problem described above, obviates the drawbacks and overcomes the limitations of the prior art, allowing to achieve at the same time the functionalities of inverters and of battery chargers.

Within the scope of this aim, an object of the present invention is to provide a device for managing a battery that also performs the function of a buck/boost converter.

A further object of the invention is to provide a particularly compact device for managing a battery that is not bulky.

Another object of the invention is to provide a device for managing a battery that is capable of giving the greatest assurances of reliability and safety in use.

Another object of the invention is to provide a device for managing a battery that is easy to provide and economically competitive if compared with the background art.

Another object of the invention is to provide a device that is particularly suitable in the field of electric drive vehicles, since it is provided with a motor inverter function integrated with a buck/boost converter, which can be reconfigured as a battery charger.

This aim, these objects and others that will become better apparent hereinafter are achieved by a device for managing a battery, comprising:
- a first coupled inductor element connected to an electric plug adapted to be connected to an electrical grid,
- a first electronic bridge connected to the first coupled inductor element,
- a capacitor connected to the first electronic bridge,
- a second electronic bridge connected to the capacitor,
- a second coupled inductor element, the second coupled inductor element defining the primary element of a transformer, the transformer including a secondary element, the second coupled inductor element being connected to the second electronic bridge,
- a first rectifier connected to the secondary element of the transformer,
characterized in that said second coupled inductor element and the first rectifier being connected alternately to a battery by means of a first switching device, the battery being connected to the capacitor by means of a first switch, said first switching device and said first switch isolating the battery from the electrical grid when said first switching device and said first switch are in a battery charger configuration.

Further characteristics and advantages will become better apparent from the description of preferred but not exclusive embodiments of the device for managing a battery, illustrated by way of non-limiting example with the aid of the accompanying drawings, wherein:
Figure 1 is a circuit diagram of a first embodiment of a device for managing a battery, in the buck/boost configuration, according to the invention;
Figure 2 is a circuit diagram of the device of Figure 1, in the battery charger configuration;
Figure 3 is a circuit diagram of a second embodiment of the device for managing a battery, in the buck/boost configuration, with the possibility to control a motor, according to the invention;
Figure 4 is a circuit diagram of the device of Figure 3 in the battery charger configuration.

With reference to the cited figures, the device for managing a battery is generally designated by the reference numeral 1, as regards the first embodiment, and by the reference numeral 100, as regards the second embodiment.

According to the invention, the device 1, 100 comprises:
- a first coupled inductor element 4, 400, which in the second embodiment can be part of an electric motor 401, which is connected to an electric plug adapted to be connected to an electrical grid 3, constituted for example by an alternating current source variable from 110 to 380 V;
- a first electronic bridge 5, which is connected to the first coupled inductor element 4, 400;
- a capacitor 6, preferably of the high-voltage, high-performance type, which is connected to the first electronic bridge 5:
- a second electronic bridge 7, which is connected to the capacitor 6;
- a second coupled inductor element 8, which forms the primary element of a transformer 9, the transformer 9 in turn including a secondary element 10, wherein the second coupled inductor element 8 is connected to the second electronic bridge 7;
- a first rectifier 11, which is connected to the secondary element 10 of the transformer 9.

The second coupled inductor element 8 and the first rectifier 11 are connected alternatively to a battery 12 by means of a first switching device 110, while the battery 12 is connected to the capacitor 6 by means of a first switch 120.

Advantageously, the second coupled inductor element 8 comprises at least two inductors 81 and 82, which have a common terminal 83 and are wound on a same core. In this manner it is possible to obtain desired coupling characteristics and ensure minimum leakage inductance.

Also, the second coupled inductor element 8 may include an auxiliary inductor 84, which forms the secondary element 10 of the transformer 9. In the working configuration as a battery charger of the device 1, 100, which will be described hereinafter, the secondary element 10 acts preferably at a high frequency, at least on the order of tens of kHz.

The first electronic bridge 5 and the second electronic bridge 7 may advantageously be H-bridges.

The second electronic bridge 7 advantageously comprises four solid-state switches 70 that are controlled by a microprocessor 14. The switches 70 can be field-effect transistors (FETs in the English acronym) or isolated-gate bipolar transistors (IGBT in the English acronym).

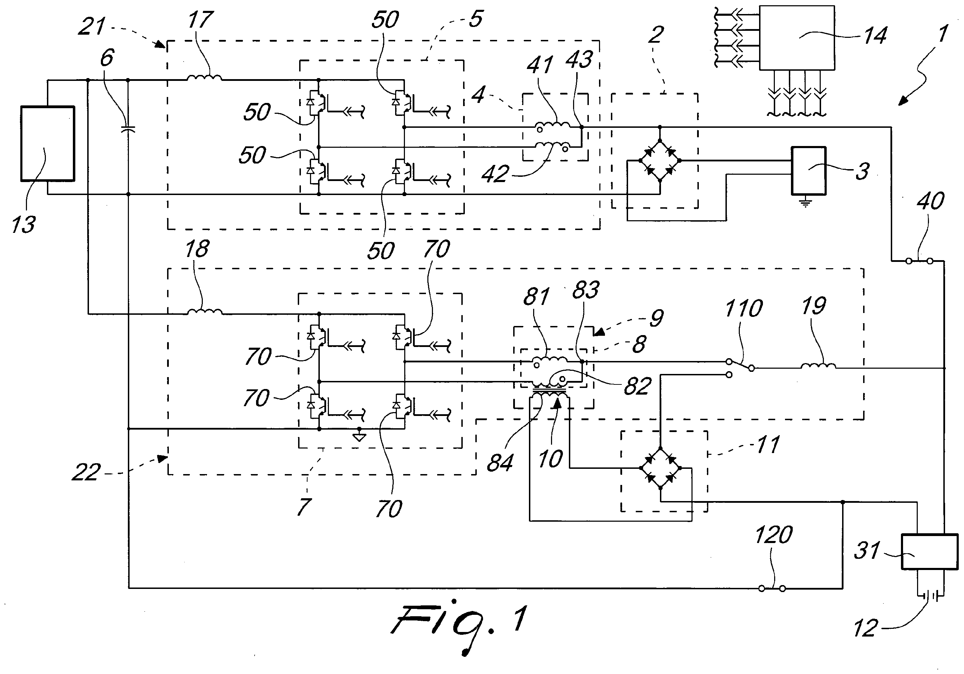

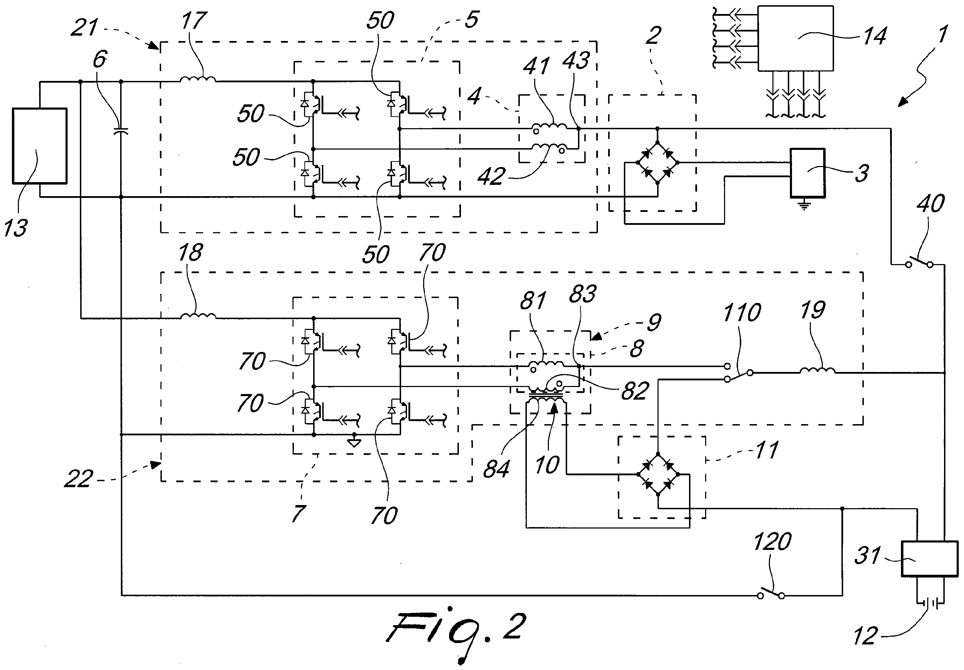

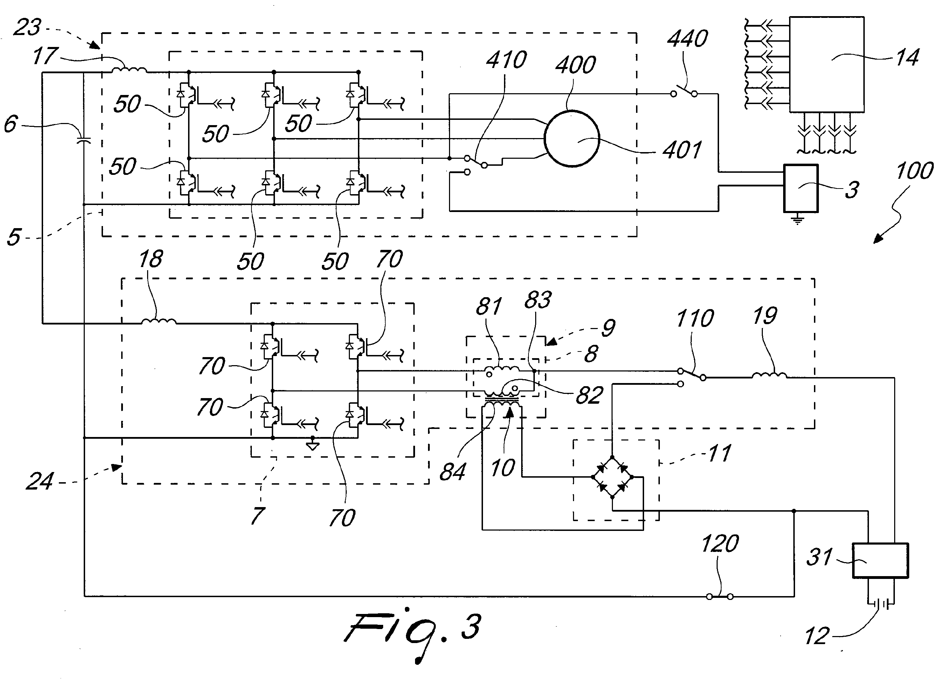

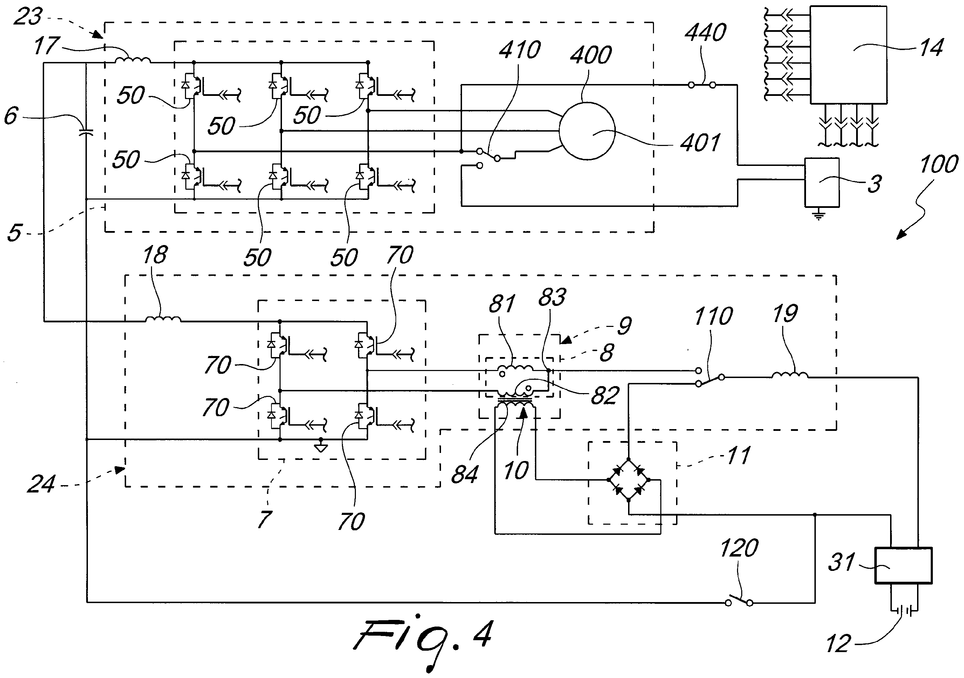

The first electronic bridge 5 may include four or six solid-state switches 50 controlled by the microprocessor 14. In particular, the device 1 according to the first embodiment, shown in Figures 1 and 2, comprises a first electronic bridge 5, which is provided with four switches 50, while the device 100 according to the second embodiment, shown in Figures 3 and 4, comprises a first electronic bridge 5 provided with six switches 50, thus providing a three-phase bridge.

In both of the illustrated embodiments, the first rectifier 11 is advantageously a rectifier bridge with diodes at high frequency, on the order of tens of kHz.

According to the first embodiment of the device 1, the first electronic bridge 5 and the second electronic bridge 7 are adapted to be connected to a load 13.

Also, the first coupled inductor element 4 comprises at least two inductors 41 and 42 that have a common terminal 43 and are wound on the same core, so as to ensure a sufficient leakage inductance.

The device 1 may comprise a second rectifier 2, which connects the electrical plug, adapted to be connected to the electrical grid 3, to the first coupled inductor element 4 and to the first electronic bridge 5.

The second rectifier 2 is advantageously a diode rectifier bridge at a low frequency, on the order of tens of Hz.

The device 2 also advantageously comprises two inductors 17 and 18 that are interposed between the capacitor 6 and, respectively, the first electronic bridge 5 and the second electronic bridge 7.

A third inductor 19 is also advantageously present between the first switching device 110 and the battery 12.

The device 1 also advantageously comprises a second switch 40, which is interposed between the battery 12 and the first coupled inductor element 4.

In particular, as shown in Figures 1 and 2, the device 1, which belongs to the category of DC/DC converters, comprises two parallel converter branches 21 and 22, in which the first branch 21 comprises the first electronic bridge 5, which faces the DC bus by means of the inductor 17, and the battery 12 by means of a pair of joined inductors 41 and 42 that belong to the first coupled inductor element 4. The diode rectifier bridge 2 is used only during the grid battery charger step, as described hereinafter.

The DC bus is a node of the electrical grid of the device 1, 100 that is common to all the active elements, i.e., to the semiconductor bridges 5 and 7 and to the capacitor 6.

In particular, by means of particular mathematical algorithms that are run continuously, the microprocessor 14 allows to accurately control the voltage at the terminals of the capacitor 6. In this manner it is possible to have a very small value of the capacitance of the capacitor 6, on the order of a few hundred microfarads. Quantifying with an example, given the currents involved in a device dedicated to electric and hybrid cars, a traditional method provides for capacitances of a capacitor that corresponds to the capacitor 6 of the device 1, 100 on the order of several thousand microfarads, often in dielectric electrolytic technology. In the device 1, 100, according to the invention, it is possible to use for the same applications capacitors using the film dielectric technology, which are advantageous in terms of reliability and performance but generally are not advantageous in the capacitance/volume ratio, on the order of 100 microfarad.

The second branch 22 includes the second electronic bridge 7, which faces the DC bus by means of the inductor 18 and the battery 12 by means of a pair of joined inductors 81 and 82 that belong to the second coupled inductor element 8. The diode rectifier bridge 11 is used only during the step as grid battery charger, as described hereinafter.

With reference to Figure 1, which illustrates the device 1 according to the first embodiment, in the buck/boost configuration, the battery 12 faces the DC bus by means of the two converter branches 21 and 22, connected in parallel; the plug adapted to connect the device 1 to the electrical grid 3 is disconnected; the positive pole of the diode rectifier bridge 11, connected to the auxiliary inductor 84, is disconnected from the battery 12. In particular, in order to obtain the buck/boost configuration, the first switch 120 is closed, the second switch 40 is closed and the first switching device 110 is closed on the branch that leads to the second coupled inductor element 8.

The two electronic bridges 5 and 7 work in the same manner, although they are adjusted independently, and at the same frequency with an appropriate phase difference that is adapted to minimize total current ripple.

Each of the two branches 21 and 22 is an integral part of a DC/DC converter which acts as a voltage or current regulator from the battery 12 toward the DC bus or from the DC bus toward the battery 12, as a function of the demand of the microcontroller 14, varying appropriately the modulation figures of the electronic bridges 5 and 7.

The auxiliary inductor 84 is irrelevant. Both coupled inductor elements 5 and 7 form the function of coupled inductors, which ensure a particularly advantageous performance/size ratio by virtue of the utilization of the characteristic of mutual inductance by a dedicated algorithm for modulating the operation of the electronic bridges 5 and 7.

The particular characteristics of the coupling between the windings of the second coupled inductor element 8, with very low leakage inductance, make it necessary in this step also to use the inductor 19.

With reference to Figure 2, which illustrates the device 1 according to the first embodiment, in the battery charger configuration, the battery 12 faces, by means of the diode rectifier bridge 11, the auxiliary inductor 84, which in this case constitutes the secondary winding 10 of a transformer 9, the primary element of which is constituted by the two joined inductors 81 and 82 that belong to the second coupled inductor element 8.

The second electronic bridge 7 connected to the second coupled inductor element 8 acts as a high-frequency H-bridge, in order to adjust the voltage and/or the current that flows in the battery 12.

The first electronic bridge 5 is connected to the electric grid 3 by means of the diode rectifier bridge 2 and acts as a power factor corrector (PFC), utilizing also the first coupled inductor element 4 in order to perform this function.

Since the circuit between the diode rectifier bridge 11 and the battery 12 of the first switching device 110 is closed, the auxiliary inductor 84 becomes the secondary element 10 of the high-frequency transformer 9; the primary winding of the high-frequency transformer 9 is the series arrangement of the two inductors 81 and 82 that belong to the second coupled inductor element 8; such series arrangement is obtained by appropriately modifying the behavior of the second electronic bridge 7. By means of the microcontroller 14, the system regulates the quantity of current that flows in the battery 12 as a function of the needs of the operator of the device.

In order to obtain the battery charger configuration, the first switch 120 is open, the second switch 40 is open, and the first switching device 110 is closed onto the branch that leads to the second rectifier 11.

According to the second embodiment of the device 100, shown in Figures 3 and 4, the first coupled inductor element 400 comprises the windings of an electric motor 401.

In particular, the electric motor 401 is a three-phase motor, the windings of which include at least one common terminal. In particular, the windings can be connected in a star configuration, and therefore each connected at one terminal in a common point and at the other terminal to the center of each individual leg of the three-phase bridge 5.

The device 100 comprises a third switch 440, which is interposed between the first coupled inductor element 400 and the electrical plug adapted to be connected to the electrical grid 3.

Also, the first coupled inductor element 4 and the electrical plug adapted to be connected to the electrical grid 3 are connected alternately to the first coupled inductor element 400 by means of a second switching device 410.

In particular, as shown in Figures 3 and 4, the device 100 comprises a first DC/DC converter branch 23 in parallel with a second DC/DC converter branch 24.

In particular, the DC/DC converter comprises the first electronic bridge 5, which faces the DC bus by means of the inductor 17 and partially the electrical grid 3 by means of the inductors that belong to the first coupled inductor element 400. The DC/DC converter comprises the second electronic bridge 7, which faces the DC bus, by means of the inductor 18, and the battery 12, by means of a pair of joined inductors 81 and 82 that belong to the second coupled inductor element 8. The diode rectifier bridge 11 is used only during the use of the device as grid battery charger, as described hereinafter.

With reference to Figure 3, which illustrates the device 100 according to the second embodiment, in the buck/boost configuration with the possibility to control the three-phase motor, the battery 12 faces the DC bus via a DC/DC converter. In particular, the negative pole of the battery 12 is connected to the zero of the DC bus by means of the first switch 120; the positive pole of the diode rectifier bridge 11 connected to the auxiliary inductor 84 is disconnected from the battery 12, since the first switching device 110 is closed onto the branch that leads to the second coupled inductor element 8.

The three windings of the electric motor 401 are each connected to the center of the three legs of the three-phase bridge 5 of the DC/AC converter by means of the second switching element 410. The electric plug adapted to connect the device 100 to the electrical grid 3 is disconnected.

In order to obtain the required configuration, shown in Figure 3, the first switch 120 is closed, the third switch 440 is open, the first switching device 110 is closed onto the branch of the circuit that leads to the second coupled inductor element 8, and the second switching device 410 is closed onto the branch of the circuit that leads to the first electronic bridge 5.

The assembly constituted by the inductor 17, the first electronic bridge 5 and the second switching device 410, acts as a three-phase inverter for controlling the motor 401.

The assembly constituted by the inductor 18, the second electronic bridge 7, the second coupled inductor element 8, the first switching device 110 and the inductor 19, acts as a bidirectional DC/DC converter, in the buck or boost mode is a function of the requirements of the control system, between the battery 12 and the DC bus that supplies power to the motor inverter 401.

The auxiliary inductor 84 is irrelevant. The second coupled inductor element 8 acts as a pair of coupled inductors, which ensure a particularly advantageous performance/size ratio by virtue of the utilization of the characteristic of mutual inductance on the part of a dedicated algorithm for modulation of the electronic bridge 7 on the part of the microcontroller 14. The particular characteristics of the coupling between the windings of the second coupled inductor element 8, with very low leakage inductance, make it necessary in this step to use the inductor 19.

With reference to Figure 4, which shows the device 100 according to the second embodiment, in the battery charger configuration, the battery 12 is disconnected from the zero of the DC bus and from the DC/DC converter and faces, via the diode rectifier bridge 11, the auxiliary inductor 84, which in this case constitutes the secondary winding 10 of a transformer 9, the primary winding of which is constituted by the series arrangement of the two inductors that are coupled on the same core of the second coupled inductor element 8.

The second electronic bridge 7, connected to the second coupled inductor to launch 8, acts as a high-frequency H-bridge in order to adjust the voltage and/or current that flows in the battery 12.

The first electronic bridge 5 is connected to the electrical grid 3 by means of the plug and via the motor and acts as a power factor corrector (PFC), also utilizing the windings of the motor 401 as an inductive component in order to perform this function.

Since the circuit between the high-frequency diode rectifier bridge 11 and the battery 12 is closed, the auxiliary inductor 84 becomes the secondary winding of a high-frequency transformer, by means of the first switching device 110; the primary winding of such high-frequency transformer is the series arrangement of the two inductors 81 and 82. By means of the microcontroller 14, the system regulates, through the second electronic bridge 7, the quantity of current that flows in the battery 12, as a function of the needs of the operator of the device 100.

In order to obtain the required configuration, shown in Figure 4, the first switch 120 is open, the third switch 440 is closed, the first switching device 110 is closed on the branch of the circuit that leads to the first rectifier 11 and the second switching device 410 is closed onto the branch of the circuit that leads to the electrical plug.

The device 1, according to the first embodiment, can operate in the DC/DC converter configuration. In particular, when the device operates as a DC/DC converter, i.e., when the battery 12 delivers power, the first electronic bridge 5 and the second electronic bridge 7 act as boosts. The battery voltage enters the two electronic bridges 5 and 7 and is boosted by the boosts, so as to manage high power levels with lower current and therefore improve efficiency. When instead the device 1 operates in regeneration, i.e., when the battery 12 absorbs energy, both electronic bridges act as choppers, i.e., the regenerated high voltage is adapted at the battery level.

This second behavior can occur also in the device 100 according to the second embodiment, in the presence of electric braking on the part of the motor, thus charging the battery 12 during braking.

According to both embodiments, the device 1, 100 may act as an isolated battery charger, where the power originates from the electrical grid 3, and the first electronic bridge 5 together with the first coupled inductor element 4 or with the electric motor 400 perform the PFC (power factor correction) function, while the second electronic bridge 7 acts as an isolated inverter. In other words, the device 1, 100, powered by the electrical grid 3, comprises a first electronic bridge 5 which, together with the first coupled inductor element 4 or the electric motor 400, performs the PFC function, a second electronic bridge 7 that powers the second coupled inductor element 8, which constitutes the primary winding of a high-frequency transformer 9, the secondary winding 10 of which is connected to a high-frequency rectifier 11 and, by means of the first switching device 110, to the battery 12, optionally passing through voltage filtering devices. In the battery charger configuration, according to the first embodiment, the device 1 may be powered both by a single-phase voltage and by a three-phase voltage. In the first case, the second rectifier 2 is a single-phase or diode-bridge rectifier and is used to convert the alternating current into pulsed current. In the second case the rectifier 2 is a three-phase rectifier.

In the case of the device 1, according to the first embodiment, the voltage in output from the second rectifier 2 passes through the first coupled inductor element 4, preferably of the ECCI (Extremely Close-Coupled Inductors). The use of coupled inductors (ECCI) allows to achieve high power densities and lower losses by virtue of a coupling factor of approximately 0.999.

The first coupled inductor element 4 is connected to the first H-bridge used as a boost at high frequency, which converts the input voltage to an output voltage that is higher than the input voltage. The set of the inductors and of the boost converter operates, as mentioned, as a PFC.

A high-voltage capacitor 6 with reduced capacitance values, as explained earlier, is connected in output from the circuit that acts as a PFC.

The second H-bridge 7 is used as an inverter, i.e., as a device capable of converting a direct current into an alternating current, preferably in a high-frequency square form, which is ideal for the proper operation of the transformer 9, the envelope of which is a function of the requirements of the battery, therefore typically a continuous shape. The voltage in output from the inverter enters the primary winding of the transformer 9, which is constituted by the second coupled inductor element 8, and is passed from the secondary winding 10 of the transformer 9 to the first rectifier 11, for example of the type of a high-frequency diode bridge.

The transformer 9 has therefore the dual function of adapting the voltage for charging the battery 12 and of creating the electrical isolation of the device 1 from the grid 3. Preferably, between the output of the diode bridge 11 and the input of the battery 12 there is a filter 31.

In practice it has been found that the device for managing a battery according to the present invention achieves the intended aim and objects, since it allows to use a single electronic integrated electronic circuit that includes the functionalities of a bidirectional DC-DC converter ("booster/chopper"), of an isolated grid battery charger complete with PFC and an inverter.

Another advantage of the device for managing a battery according to the invention resides in that it occupies a small space, has greater flexibility and lower costs.

Essentially, the presence of the transformer, together with the possibility to reconfigure the electrical grid of the device by means of the switching devices and the switches, and with the possibility provided by microprocessor control of all the active elements to modify their behavior, and therefore to convert, for example, buck/boost converters into grid PFC devices, buck/boost converters into high-frequency inverters for driving adequate transformers, three-phase bridges for motor inverters with four quadrants in grid PFC devices, allows to obtain a battery charger that ensures a high switching frequency, controlled voltage and current, small size and high efficiency, utilizing an existing DC/DC converter with two buck/boost branches in parallel or a set of a buck/boost converter and of a three-phase motor inverter.

This feature allows to save an entire battery charger and allows highly advanced use, in view of the automatic management of the entire system without the need to for a further high-level controller (for example a Vehicle Control Unit in the automotive environment).

## Claims

1. A device (1, 100) for managing a battery, comprising:
- a first coupled inductor element (4, 400), connected to an electric plug adapted to be connected to an electrical grid (3),
- a first electronic bridge (5), connected to said first coupled inductor element (4, 400),
- a capacitor (6), connected to said first electronic bridge (5),
- a second electronic bridge (7), connected to said capacitor (6),
- a second coupled inductor element (8), said second coupled inductor element (8) defining the primary element of a transformer (9), said transformer (9) comprising a secondary element (10), said second coupled inductor element (8) being connected to said second electronic bridge (7),
- a first rectifier (11), which is connected to said secondary element (10) of said transformer (9);
said device being **characterized in that** it comprises a first switching device (110) adapted to connect the battery (12) alternatively to either said second coupled inductor element (8), in a buck/boost converter configuration of said device, or to said first rectifier (11), in a battery charger configuration of said device; said battery (12) being connected to said capacitor (6) by means of a first switch (120); said first switching device (110) and said first switch (120) being adapted to isolate said battery from the electrical grid (3) when said first switching device (110) and said first switch (120) are in said battery charger configuration.

2. The device (1, 100) for managing a battery, according to claim 1, **characterized in that** said second coupled inductor element (8) comprises at least two inductors (81, 82), which have a common terminal (83) and are wound on a same core.

3. The device (1, 100) for managing a battery, according to claim 2, **characterized in that** said second coupled inductor element (8) comprises an auxiliary inductor (84), which forms said secondary element (10) of said transformer (9).

4. The device (1, 100) for managing a battery, according to one or more of the preceding claims, **characterized in that** said second electronic bridge (7) comprises four solid-state switches (70) controlled by a microprocessor (14).

5. The device (1, 100) for managing a battery, according to one or more of the preceding claims, **characterized in that** said first electronic bridge (5) comprises four or six switches solid-state switches (50) controlled by a microprocessor (14).

6. The device (1) for managing a battery according to one or more of the preceding claims, **characterized in that** said first electronic bridge (5) and said second electronic bridge (7) are adapted to be connected to a load (13).

7. The device (1) for managing a battery, according to claim 6, **characterized in that** said first coupled inductor element (4) comprises at least two inductors (41, 42) that have a common terminal (43) and are wound on a same core.

8. The device (1) for managing a battery, according to claim 6 or 7, **characterized in that** it comprises a second rectifier (2) that connects said electrical plug, adapted to be connected to said electrical grid (3), to said first coupled inductor element (4) and to said first electronic bridge (5).

9. The device (1) for managing a battery, according to one or more of claims 6 to 8, **characterized in that** it comprises a second switch (40) that is interposed between said battery (12) and said first coupled inductor element (4).

10. The device (100) for managing a battery according to one or more of claims 1 to 3, **characterized in that** said first coupled inductor element (400) comprises the windings of an electric motor (401).

11. The device (100) for managing a battery, according to claim 10, **characterized in that** said electric motor (401) is a three-phase motor, the windings of said three-phase motor comprising at least one common terminal.

12. The device (100) for managing a battery, according to claim 10 or 11, **characterized in that** it comprises a third switch (440) that is interposed between said first coupled inductor element (400) and said electric plug adapted to be connected to said electrical grid (3).

13. The device (100) for managing a battery, according to one or more of claims 10 to 12, **characterized in that** said first coupled inductor element (4) and said electric plug, adapted to be connected to said electrical grid (3), are connected alternatively to said first coupled inductor element (400) by means of a second switching device (410).

## Patentansprüche

1. Eine Vorrichtung (1, 100) zur Verwaltung einer Batterie, die Folgendes umfasst:
- ein erstes gekoppeltes Induktorelement (4, 400), verbunden mit einem Stromstecker, der ausgebildet ist, um mit einem Stromnetz (3) verbunden zu werden,
- eine erste elektronische Brücke (5), verbunden mit dem ersten gekoppelten Induktorelement (4, 400),
- einen Kondensator (6), angeschlossen an die erste elektronische Brücke (5),
- eine zweite elektronische Brücke (7), angeschlossen an den Kondensator (6),
- ein zweites gekoppelles Induktorelement (8), wobei das zweite gekoppelte Induktorelement (8) das primäre Element eines Transformators (9) bestimmt, wobei der Transformator (9) ein sekundäres Element (10) umfasst, wobei das zweite gekoppelte Induktorelement (8) mit der zweiten elektronischen Brücke (7) verbunden ist,
- einen ersten Gleichrichter (11), der mit dem sekundären Element (10) des Transformators (9) verbunden ist;
wobei die Vorrichtung **dadurch gekennzeichnet ist, dass** sie eine erste Schaltvorrichtung (110) umfasst, ausgebildet, um die Batterie (12) alternativ entweder mit dem zweiten gekoppelten Induktorelement (8), in einer Tief-Hochsetzsteller-Konfiguration der Vorrichtung, oder mit dem ersten Gleichrichter (11), in einer Batterie-Ladegerät-Konfiguration der Vorrichtung, zu verbinden;
wobei die Batterie (12) über einen ersten Schalter (120) mit dem Kondensator (6) verbunden ist; wobei die erste Schaltvorrichtung (110) und der erste Schalter (120) ausgebildet sind, um die Batterie gegenüber dem Stromnetz (3) zu isolieren, wenn die erste Schaltvorrichtung (110) und der erste Schalter (120) sich in der Batterie-Ladegerät-Konfiguration befinden.

2. Die Vorrichtung (1, 100) zur Verwaltung einer Batterie gemäß Anspruch 1, **dadurch gekennzeichnet, dass** das zweite gekoppelte Induktorelement (8) mindestens zwei Induktoren (81, 82) umfasst, die eine gemeinsame Klemme (83) haben und um einen selben Kern gewunden sind.

3. Die Vorrichtung (1, 100) zur Verwaltung einer Batterie gemäß Anspruch 2, **dadurch gekennzeichnet, dass** das zweite gekoppelte Induktorelement (8) einen zusätzlichen Induktor (84) umfasst, der das sekundäre Element (10) des Transformators (9) bildet.

4. Die Vorrichtung (1, 100) zur Verwaltung einer Batterie gemäß einem oder mehreren der obigen Ansprüche, **dadurch gekennzeichnet, dass** die zweite elektronische Brücke (7) vier Festkörperschalter (70) umfasst, die von einem Mikroprozessor (14) gesteuert sind.

5. Die Vorrichtung (1, 100) zur Verwaltung einer Batterie gemäß einem oder mehreren der obigen Ansprüche, **dadurch gekennzeichnet, dass** die erste elektronische Brücke (5) vier oder sechs Festkörperschalter (50) umfasst, die von einem Mikroprozessor (14) gesteuert werden.

6. Die Vorrichtung (1) zur Verwaltung einer Batterie gemäß einem oder mehreren der obigen Ansprüche, **dadurch gekennzeichnet, dass** die erste elektronische Brücke (5) und die zweite elektronische Brücke (7) ausgebildet sind, um mit einer Last (13) verbunden zu werden.

7. Die Vorrichtung (1) zur Verwaltung einer Batterie gemäß Anspruch 6, **dadurch gekennzeichnet, dass** das erste gekoppelte Induktorelement (4) mindestens zwei Induktoren (41, 42) umfasst, die eine gemeinsame Klemme (43) haben und um einen selben Kern gewunden sind.

8. Die Vorrichtung (1) zur Verwaltung einer Batterie gemäß Anspruch 6 oder 7, **dadurch gekennzeichnet, dass** sie einen zweiten Gleichrichter (2) umfasst, der den Stromstecker, der ausgebildet ist, um mit dem Stromnetz (3) verbunden zu werden, mit dem ersten gekoppelten Induktorelement (1) und mit der ersten elektronischen Drücke (5) verbindet.

9. Die Vorrichtung (1) zur Verwaltung einer Batterie gemäß einem oder mehreren der Ansprüche 6 bis 8, **dadurch gekennzeichnet, dass** sie einen zweiten Schalter (40) umfasst, der zwischen der Batterie (12) und dem ersten gekoppelten Induktorelement (4) angeordnet ist.

10. Die Vorrichtung (100) zur Verwaltung einer Batterie gemäß einem oder mehreren der Ansprüche 1 bis 3, **dadurch gekennzeichnet, dass** das erste gekoppelte Induktorelement (400) die Wicklungen eines Elektromotors (401) umfasst.

11. Die Vorrichtung (100) zur Verwaltung einer Batterie gemäß Anspruch 10, **dadurch gekennzeichnet, dass** der Elektromotor (401) ein Dreiphasenmotor ist, wobei die Wicklungen des Dreiphasenmotors mindestens eine gemeinsame Klemme umfassen.

12. Die Vorrichtung (100) zur Verwaltung einer Batterie gemäß Anspruch 10 oder 11, **dadurch gekennzeichnet, dass** sie einen dritten Schalter (440) umfasst, der zwischen dem ersten gekoppelten Induktorelement (400) und dem Stromstecker angeordnet ist, der ausgebildet ist, um mit dem Stromnetz (3) verbunden zu werden.

13. Die Vorrichtung (100) zur Verwaltung einer Batterie gemäß einem oder mehreren der Ansprüche 10 bis 12, **dadurch gekennzeichnet, dass** das erste gekoppelte Induktorelement (4) und der Stromatccker, der ausgebildet ist, um mit dem Stromnetz (3) verbunden zu werden, alternativ über eine zweite Schaltvorrichtung (410) mit dem ersten gekoppelten Induktorelement (400) verbunden sind.

## Revendications

1. Dispositif (1, 100) de gestion de batterie, comprenant:
- un premier élément inducteur couplé (4, 400) connecté à une fiche électrique adaptée pour être connectée à un réseau électrique (3),
- un premier pont électronique (5) connecté audit premier élément inducteur couplé (4, 400),
- un condensateur (6) connecté audit premier pont électronique (5),
- un deuxième pont électronique (7) connecté audit condensateur (6),
- un deuxième élément inducteur couplé (8), ledit deuxième élément inducteur couplé (8) définissant l'élément primaire d'un transformateur (9), ledit transformateur (9) comprenant un élément secondaire (10), ledit deuxième élément inducteur couplé (8) étant connecté audit deuxième pont électronique (7),
- un premier redresseur (11) connecté audit élément secondaire (10) dudit transformateur (9);
ledit dispositif étant **caractérisé en ce qu'**il comprend un premier dispositif interrupteur (110) adapté pour connecter la batterie (12) alternativement soit audit deuxième élément inducteur couplé (8), dans une configuration à convertisseur buck-boost dudit dispositif, soit audit premier redresseur (11), dans une configuration de chargeur de batterie dudit dispositif;
ladite batterie (12) étant connectée audit condensateur (6) à l'aide d'un premier interrupteur (120);
ledit premier dispositif interrupteur (110) et ledit premier interrupteur (120) étant adaptés pour isoler ladite batterie dudit réseau électrique (3) quand ledit premier dispositif interrupteur (110) et ledit premier interrupteur (120) sont dans ladite configuration de chargeur de batterie.

2. Dispositif (1, 100) de gestion de batterie selon la revendication 1, **caractérisé en ce que** ledit deuxième élément inducteur couplé (8) comprend au moins deux inducteurs (81, 82) qui ont une borne commune (83) et sont enroulés autour d'un même noyau.

3. Dispositif (1, 100) de gestion de batterie selon la revendication 2, **caractérisé en ce que** ledit deuxième élément inducteur couplé (8) comprend un inducteur auxiliaire (84) qui forme ledit élément secondaire (10) dudit transformateur (9).

4. Dispositif (1, 100) de gestion de batterie selon une ou plusieurs des revendications précédentes, **caractérisé en ce que** ledit deuxième pont électronique (7) comprend quatre interrupteurs à état solide (70) contrôlés par un microprocesseur (14).

5. Dispositif (1, 100) de gestion de batterie selon une ou plusieurs des revendications précédentes, **caractérisé en ce que** ledit premier pont électronique (5) comprend quatre ou six interrupteurs à état solide (50) contrôlés par un microprocesseur (14).

6. Dispositif (1) de gestion de batterie selon une ou plusieurs des revendications précédentes, **caractérisé en ce que** ledit premier pont électronique (5) et ledit deuxième pont électronique (7) sont adaptés pour être connectés à une charge (13).

7. Dispositif (1) de gestion de batterie selon la revendication 6, **caractérisé en ce que** ledit premier élément inducteur couplé (4) comprend au moins deux inducteurs (41, 42) qui ont une borne commune (43) et sont enroulés autour d'un même noyau.

8. Dispositif (1) de gestion de batterie selon la revendication 6 ou 7, **caractérisé en ce qu'**il comprend un deuxième redresseur (2) qui connecte ladite fiche électrique, adaptée pour être connectée audit réseau électrique (3), audit premier élément inducteur couplé (4) et audit premier pont électronique (5).

9. Dispositif (1) de gestion de batterie selon une ou plusieurs des revendications 6 à 8, **caractérisé en ce qu'**il comprend un deuxième interrupteur (40) interposé entre ladite batterie (12) et ledit premier élément inducteur couplé (4).

10. Dispositif (100) de gestion de batterie selon une ou plusieurs des revendications 1 à 3, **caractérisé en ce que** ledit premier élément inducteur couplé (400) comprend les enroulements d'un moteur électrique (401).

11. Dispositif (100) de gestion de batterie selon la revendication 10, **caractérisé en ce que** ledit moteur électrique (401) est un moteur triphasé, les enroulements dudit moteur triphasé comprenant au moins une borne commune.

12. Dispositif (100) de gestion de batterie selon la revendication 10 ou 11, **caractérisé en ce qu'**il comprend un troisième interrupteur (440) interposé entre ledit premier élément inducteur couplé (400) et ladite fiche électrique adaptée pour être connectée audit réseau électrique (3).

13. Dispositif (100) de gestion de batterie selon une ou plusieurs des revendications 10 à 12, **caractérisé en ce que** ledit premier élément inducteur couplé (4) et ladite fiche électrique adaptée pour être connectée audit réseau électrique (3) sont connectés alternativement audit premier élément inducteur couplé (400) à l'aide d'un deuxième dispositif interrupteur (410).
